# EUROPEAN PATENT SPECIFICATION

(11) **EP 0 492 947 B1**
(45) Date of publication and mention of the grant of the patent: **13.11.1996**
(21) Application number: 91311726.3
(22) Date of filing: 18.12.1991
(51) Int. Cl.: C08L 79/08, C08L 81/02, C08G 18/64, C08G 18/40

(54) **Heat-resistant resin composition**
Hitzebeständige Harzzusammensetzung
Composition de resine resistant à la chaleur

(30) Priority: 20.12.1990 JP 411822/90; 15.02.1991 JP 42240/91
(43) Date of publication of application: 01.07.1992
(73) Proprietor: MITSUBISHI GAS CHEMICAL COMPANY, INC., Tokyo, 100 (JP)
(72) Inventor: Kawaki, Takao, c/o Mitsubishi Gas Kagaku K.K., Tsukuba-shi, Ibaraki-ken (JP); Amagai, Akikazu, c/o Mitsubishi Gas Kagaku K.K., Tsukuba-shi, Ibaraki-ken (JP); Ishikawa, Masahiko, c/o Mitsubishi Gas Kagaku K.K., Tsukuba-shi, Ibaraki-ken (JP); Yamada, Toshiaki, c/o Mitsubishi Gas Kagaku K.K., Tsukuba-shi, Ibaraki-ken (JP); Hirai, Yasuhiro, c/o Mitsubishi Gas Kagaku K.K., Tsukuba-shi, Ibaraki-ken (JP); Ban, Hajime, c/o Mitsubishi Gas Kagaku K.K., Tsukuba-shi, Ibaraki-ken (JP)
(74) Representative: Votier, Sidney David

(56) References cited:
- EP-A- 0 184 592
- EP-A- 0 223 958
- EP-A- 0 365 877
- PATENT ABSTRACTS OF JAPAN, vol. 6, no. 257 (C-140), 16th december 1982; & JP-A-57 151 647
- PATENT ABSTRACTS OF JAPAN, vol. 6, no. 257 (C-140), 16th December 1982; & JP-A-57 151 648

## Description

### Detailed Description of the Invention

The present invention relates to a heat-resistant resin composition. More specifically, it relates to a heat-resistant resin composition which is excellent not only in heat resistance but also in melt flowability and mechanical strength.

Polyamideimide resins are inferior in melt flowability although these are plastic materials excellent in heat resistance, mechanical strength, electric characteristics and chemical resistance. Most of polyamideimide resins are hard to mold by injection molding, and it is general practice at present to employ a compression molding method.

Meanwhile, a polyphenylene sulfide resin has features that it is excellent in heat resistance, electric characteristics and solvent resistance, particularly in melt flowability. However, it has a defect that it is brittle.

Japanese Patent Publication No. 9754/1982 discloses a resin composition obtained by mixing 70 to 99.9 parts by weight of a polyamideimide resin and 30 to 0.1 part by weight of a polyphenylene sulfide resin by melting them under heat.

The above Japanese Patent Publication describes that the said resin composition containing a polyphenylene sulfide resin shows improvement in the melt processability of the polyamideimide resin.

On the other hand, although having high heat resistance of the polyamideimide resin, the above resin composition has a defect that it shows a decrease in mechanical strength due to the brittleness of the polyphenylene sulfide resin. That is, a decrease in mechanical strength is observed regardless of an amount of a polyphenylene sulfide resin used. In particular, when the amount of a polyphenylene sulfide resin exceeds 30 % by weight, the above resin composition shows an extraordinary decrease in mechanical strength and cannot retain mechanical strength required of plastic materials.

It is an object of the present invention to provide a heat-resistant resin composition.

It is another object of the present invention to provide a heat-resistant resin composition having well-balanced properties among heat resistance, mechanical strength and flowability.

Other objects and advantages as well as the above objects and advantages of the present invention will be apparent from the following description.

According to the present invention, the above objects and advantages of the present invention are achieved by a heat-resistant resin composition comprising a melt-kneaded product of:
(A) at least one member selected from the group consisting of a polyamideimide resin precursor containing not less than 50 mol % of a recurring unit of the formula (1)-a, 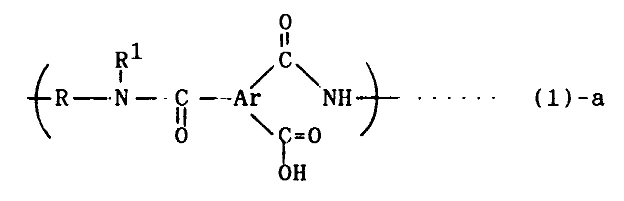 wherein R is a divalent aromatic group or aliphatic group, R¹ is a hydrogen atom, an alkyl group or a phenyl group, and Ar is a trivalent aromatic group composed of at least one six-membered ring,
   and a polyamideimide resin containing not less than 50 mol % of a recurring unit of the formula (1)-b, 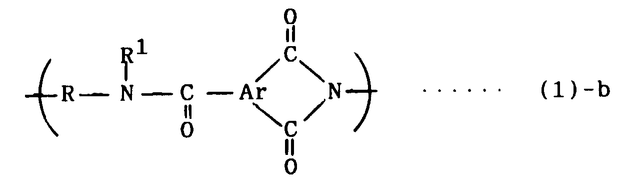 wherein R, R¹ and Ar are as defined in the above formula (1)-a,
(B) a polyphenylene sulfide resin, and
(C) an organic isocyanate compound having at least two isocyanate groups in the molecule.

The above resin composition of the present invention makes it possible to prevent a decrease in mechanical strength which occurs when a polyphenylene sulfide resin is incorporated for the purpose of improving the melt flowability of a polyamideimide resin. In particular, a composition containing 30 % by weight or more of a polyphenylene sulfide resin can be also improved in mechanical strength. According to the present invention, therefore, it is possible to provide, as a novel material, a resin composition which contains a high content of a polyphenylene sulfide resin, i.e., has excellent flowability and which further has improved mechanical strength.

The component (A) constituting the resin composition of the present invention contains one or both of the polyamideimide resin precursor and the polyamideimide resin as described above.

The polyamideimide resin precursor is composed mainly of the recurring unit of the above formula (1)-a. That is, the polyamideimide resin precursor used in the present invention may be composed of the recurring unit of the above formula (1)-a alone or may be composed of not less than 50 mol% of the recurring unit of the above formula (1)-a and not more than 50 mol% of other recurring unit(s). The recurring unit of the above formula (1)-a preferably makes up 70 to 100 mol%, more preferably nearly 100 mol%.

In the formula (1)-a, R is a divalent aromatic group or aliphatic group.

Examples of the divalent aromatic group are

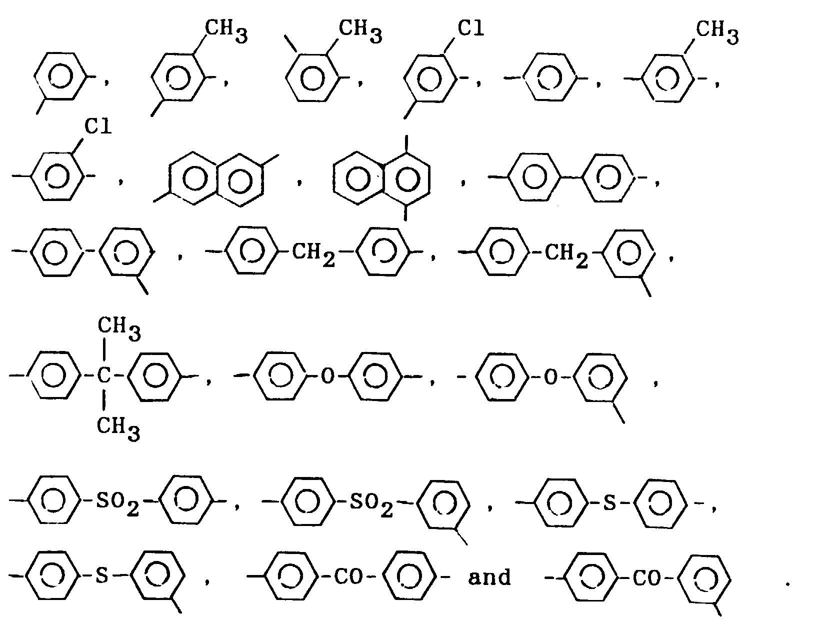

Examples of the divalent aliphatic group are 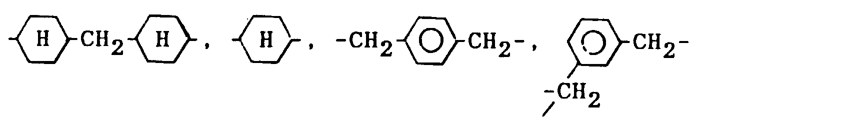 and (̵CH₂ 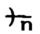 (n = 2 - 12).

Of these, preferred are 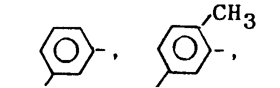 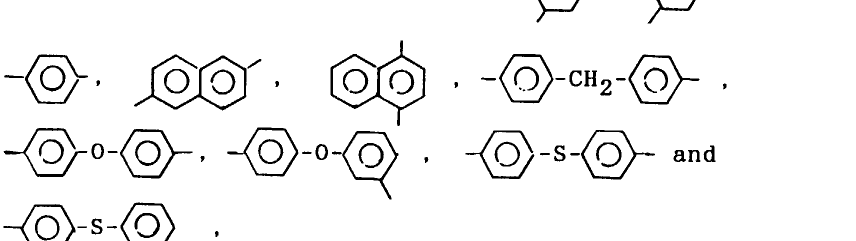 and more preferred are 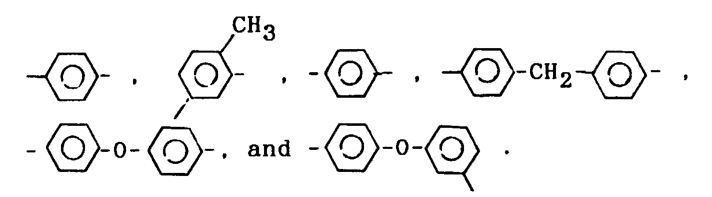 Particularly preferred are

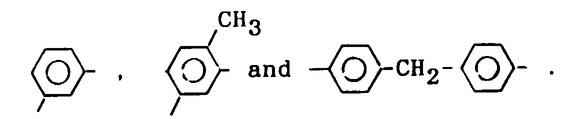

In the formula (1)-a, R¹ is a hydrogen atom, an alkyl group or a phenyl group. The alkyl group may be linear or branched. Examples of the alkyl group are preferably those having 1 to 3 carbon atoms such as methyl, ethyl and propyl.

In the formula (1)-a, examples of Ar are

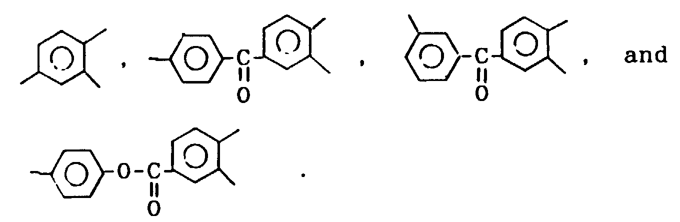

Of these, particularly preferred is

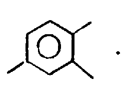

Specific examples of the recurring unit of the above formula (1)-a are clearly understood from the above specific examples of R, R¹ and Ar.

The polyamideimide resin precursor used in the present invention may be composed of a combination of the recurring unit of the formula (1)-a and other recurring unit(s). Examples of the other recurring unit(s) are preferably the recurring unit of the above formula (1)-b, a recurring unit of the formula (2), 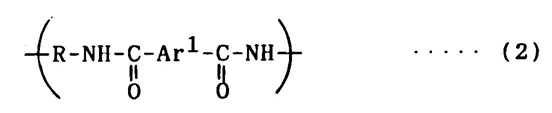 wherein R is as defined above and Ar¹ is a divalent aromatic group composed of at least one six-membered ring or an aliphatic group, a recurring unit of the formula (3), 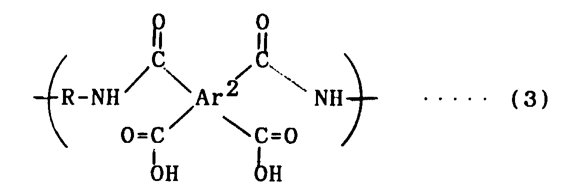 wherein R is as defined above and Ar² is a tetravalent aromatic group formed of at least one six-membered ring,
and a recurring unit of the formula (4), 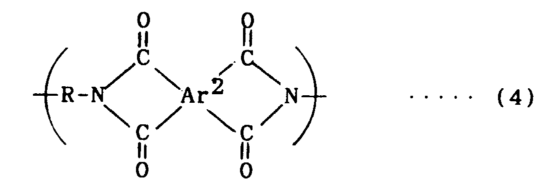 wherein R and Ar² are as defined above.

The other recurring units above are contained preferably in an amount of not more than 30 mol%.

Specific examples of R, R¹ and Ar in the formula (1)-b are as described concerning the formula (1)-a.

Examples of Ar¹ in the formula (2) are preferably 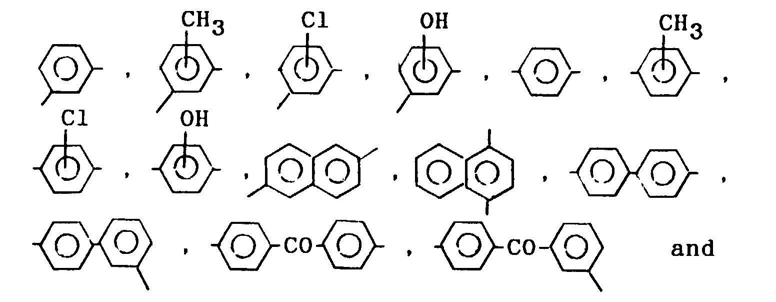 (̵CH₂ 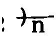 (n= 2 - 12).

Examples of Ar² in the formulae (3) and (4) are preferably

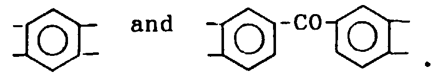

Specific examples of the other recurring units of the formulae (1)-b, (2), (3) and (4) will be clearly understood from the above specific examples.

The polyamideimide resin precursor used in the present invention may contain one or more recurring units of the formula (1)-a. Similarly, the polyamideimide resin precursor used in the present invention may contain one or more recurring units of the formula (1)-b, one or more recurring units of the formula (2), one or more recurring units of the formula (3) and one or more recurring units of the formula (4).

The above polyamideimide resin precursor can be produced by a known method, e.g., a method disclosed in Japanese Patent Publications Nos. 15637/1967 and 15513/1971. For example, it can be produced by reacting at least one of aromatic tricarboxylic acid anhydride monochlorides of the formula (5), 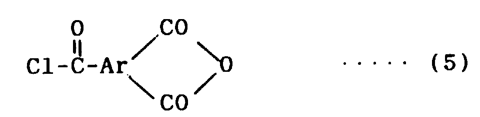 wherein Ar is as defined above,
with at least one of diamines of the formula (6),

NH₂-R-NH₂ (6)

wherein R is as defined above,
optionally together with a dicarboxylic acid dichloride of the formula (7), 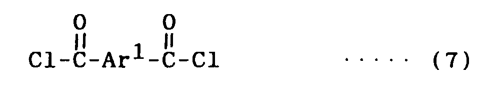 wherein Ar¹ is as defined above,
and/or an aromatic tetracarboxylic acid anhydride of the formula (8), 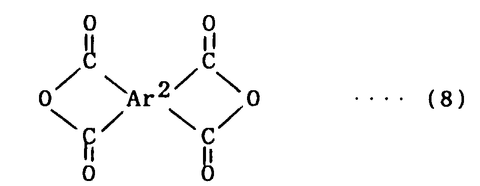 wherein Ar² is as defined above,
in a mixed solvent containing water and a nonbasic organic solvent miscible with water in the presence of an acceptor for hydrogen chloride to be formed as a by-product.

The acceptor for hydrogen chloride is preferably selected, for example, from triethylamine and sodium hydroxide. The nonbasic organic solvent is preferably selected, for example, from acetone, methyl ethyl ketone, tetrahydrofuran and dioxane.

Further, the component (A) constituting the resin composition of the present invention may be a polyamideimide resin.

The polyamideimide resin may be composed of a recurring unit of the above formula (1)-b alone or not less than 50 mol% of a recurring unit of the formula (1)-b and not more than 50 mol% of other recurring unit(s).

The recurring unit of the formula (1)-b preferably makes up 70 to 100 mol%, more preferably nearly 100 mol%.

In the formula (1)-b, R, R¹ and Ar are as defined in the above formula (1)-a. Specific examples thereof are also as described concerning the formula thereof are also as described concerning the formula (1)-a.

Specific examples of the recurring unit of the formula (1)-b will be accordingly clearly understood from the specific examples of R, R¹ and Ar.

The polyamideimide resin used in the present invention may be composed of a combination of the recurring unit of the formula (1)-b and other recurring unit(s). Examples of the other recurring unit(s) are preferably a recurring unit of the formula (1)-a, a recurring unit of the formula (2), a recurring unit of the formula (3) and a recurring unit of the formula (4).

The other recurring unit(s) above is(are) contained in an amount of not more than 50 mol% (or less than 50 mol% when the recurring unit of the formula (1)-a alone is contained as other recurring unit in view of avoiding duplication of the polyamideimide resin precursor), preferably not more than 30 mol%.

Specific examples of the other recurring units of the formulae (1)-a, (2), (3) and (4) will be clearly understood from the above specific examples.

The polyamideimide resin used in the present invention may contain one or more recurring units of the formula (1)-b. Similarly, the polyamideimide resin used in the present invention may contain one or more recurring units of the formula (1)-a, one or more recurring units of the formula (2), one or more recurring units of the formula (3) and one or more recurring units of the formula (4).

The above polyamideimide resin can be produced by a known method, e.g., methods disclosed in Japanese Patent Publications Nos. 8910/1965, 19274/1969, 15637/1967, 15513/1971 and 4077/1974 and Japanese Laid-Open Patent Publication No. 180532/1983 and Japanese Patent Publications Nos. 33120/1975, 2397/1970 and 16171/1981.

For example, the above polyamideimide resin can be produced by reacting at least one of aromatic tricarboxylic acid anhydride monochlorides of the above formula (5) with at least one of diamines of the above formula (6) optionally together with a dicarboxylic acid dichloride of the above formula (7) and/or an aromatic tetracarboxylic acid anhydride of the above formula (8) (a) in a polar solvent such as N-methylpyrrolidone, dimethylformamide, dimethylacetamide or cresol in the presence or absence of an acceptor for hydrogen chloride formed as a by-product, or (b) in a mixed solvent containing water and a nonbasic organic solvent miscible with water such as acetone, methyl ethyl ketone, tetrahydrofuran or dioxane in the presence of an acceptor for hydrogen chloride formed as a by-product such as triethylamine or sodium hydroxide.

Another method is also available, in which, for example, at least one of aromatic tricarboxylic acid anhydride of the formula (9), 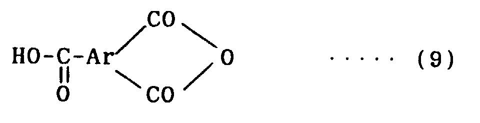 wherein Ar is as defined in the formula (1)-a,
and at least one of diisocyanates of the formula (10),

O=C=N-R-N=C=O (10)

wherein R is as defined in the formula (1)-a, are reacted with each other optionally together with a dicarboxylic acid of the formula (11), 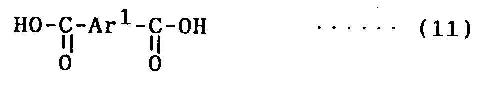 wherein Ar¹ is as defined in the formula (2), and/or an aromatic tetracarboxylic acid anhydride of the above formula (8) in the above polar solvent such as N-methylpyrrolidone or in the absence of a solvent. In this method, a diamine may be used in the presence or absence of a dehydrating catalyst as a substitute for the diisocyanate (direct polymerization method).

In any of the above methods, the formed product can be treated under heat in order to convert the amic acid structure to an imide ring.

In the resin composition of the present invention, the component (A) is at least one member selected from the group consisting of the above polyamideimide resin precursor and the above polyamideimide resin.

The component (B) constituting the resin composition of the present invention is a polyphenylene sulfide resin.

For example, the polyphenylene sulfide resin (to be sometimes simplified as "polyphenylene sulfide" hereinafter) advantageously contains at least 70 mol %, preferably at least 90 mol%, of a recurring unit of the formula (12),

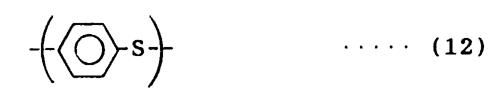

Examples of the recurring unit other than the recurring unit of the formula (12) are preferably a recurring unit of the formula (13), 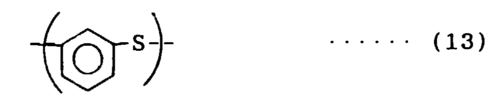 a recurring ether unit for the formula (14), 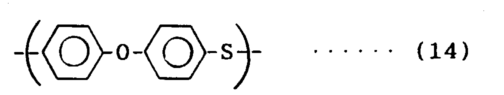 a recurring sulfone unit of the formula (15), 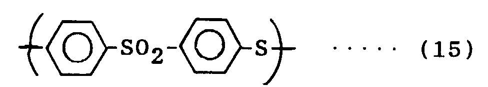 a recurring biphenyl unit of the formula (16), 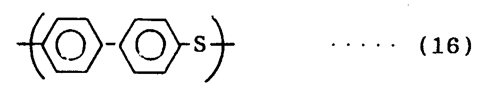 a recurring amino group-substituted phenyl sulfide unit of the formula (17), 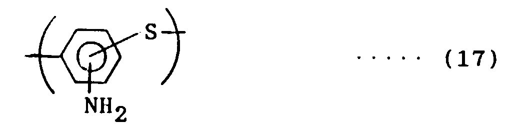 a recurring carboxyl group-substituted phenyl sulfide unit of the formula (18), 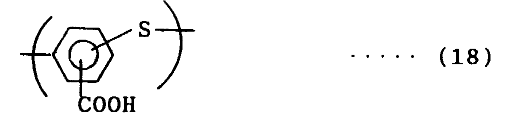 a recurring alkyl-substituted, nitro-substituted, phenyl-substituted or alkoxy-substituted phenyl sulfide unit similar to the above, and a recurring trivalent phenyl sulfide unit.

The SH terminal group concentration of the above polyphenylene sulfide does not constitute an important factor. However, under some compositional and kneading conditions, a polyphenylene sulfide having an SH terminal group concentration of 10 mg or more equivalent weights per kg of the resin sometimes gives a favorable effect, and that having an SH terminal group concentration of 20 mg or more equivalent weights further give a more favorable effect.

The polyphenylene sulfide can be produced by a variety of known polymerization methods. For example, preferred is a method in which starting materials such as sodium sulfide and p-dichlorobenzene are reacted in an amide-based solvent such as N-methylpyrrolidone or dimethylacetamide or in a sulfone-based solvent such as sulforane. In this reaction, it is preferred to add an alkyl metal carboxylic acid salt such as sodium acetate or lithium acetate thereby to adjust the polymerization degree.

Further, the SH group can be easily introduced to the terminal of the polyphenylene sulfide, for example, by treating the polyphenylene sulfide with hydrochloric acid or acetic acid at a final stage of the polyphenylene sulfide production, or by treating purified polyphenylene sulfide with hydrochloric acid, acetic acid in acetone.

In the resin composition of the present invention, the above polyphenylene sulfides may be used alone or in combination of two or more as a component (B).

The organic isocyanate compound having at least two isocyanate groups in the molecule, used as a component (C) in the present invention, is a generic term for compounds in which at least two isocyanate groups are bonded to an aromatic or aliphatic group.

Examples of such compounds are aromatic polyisocyanates such as 2,4-tolylene diisocyanate, 2,6-tolylene diisocyanate, 1,4-naphthalene diisocyanate, 1,5-naphthalene diisocyanate, 2,6-naphthalene diisocyanate, 1,3-phenylene diisocyanate, 1,4-phenylene diisocyanate, 4,4′-diphenylmethane diisocyanate, 2,2′-dimethyldiphenylmethane-4,4′-diisocyanate, 3,3′-dimethyldiphenylmethane-4,4′-diisocyanate, 4,4′-biphenyl diisocyanate, 2,4′-biphenyl diisocyanate, 3,3′-dimethylbiphenyl-4,4′-diisocyanate, 4,4′-diphenylether diisocyanate, 4,4′-diphenylsulfone diisocyanate and triphenylmethane triisocyanate; aliphatic polyisocyanates such as hexamethylene diisocyanate, 2,4,4-trimethylhexamethylene diisocyanate, 2,2,4-trimethylhexamethylene diisocyanate, dicyclohexylmethane-4,4′-diisocyanate, xylylene diisocyanate, bis(isocyanatemethyl)-cyclohexane and 3-isocyanatemethyl-3,5,5-trimethylcyclohexyl isocyanate or isothiocyanates corresponding to these; adducts of polyhydric alcohol with the above aromatic or aliphatic polyisocyanates; adducts of water with the aromatic or aliphatic polyisocyanates; adducts of amines with the aromatic or aliphatic polyisocyanates; and isocyanurate products obtained by modifying the aromatic or aliphatic polyisocyanates.

Of the above compounds, aromatic diisocyanates are preferred. More preferred are 2,4-tolylene diisocyanate, 2,6-tolylene diisocyanate, 1,3-phenylene diisocyanate, 1,4-phenylene diisocyanate, 4,4′-diphenylmethane diisocyanate, 4,4′-biphenyl diisocyanate and 4,4′-diphenylether diisocyanate. Particularly preferred are 2,4-tolylene diisocyanate, 2,6-tolylene diisocyanate and 4,4′-diphenylmethane diisocyanate.

In the resin composition of the present invention, the above organic isocyanate compounds (C) may be used alone or in combination.

In the resin composition of the present invention, the amount of the component (A) based on the total amount of the components (A) and (B) is 5 to 95 % by weight, and the amount of the component (B) based on the same basis is 5 to 95 % by weight. When the amount of the component (A) or (B) is more than the above upper limit, the resultant resin composition is liable to show a decrease in flowability, heat resistance or mechanical properties.

The amount of the component (A) based on the above basis is preferably 20 to 70 % by weight, and the amount of the component (B) on the same basis is preferably 30 to 80 % by weight.

The amount of the component (A) based on the above basis is particularly preferably 20 to 65 % by weight, and the amount of the component (B) on the same basis is particularly preferably 35 to 80 % by weight.

The amount of the component (C) per 100 parts by weight of the total amount of the components (A) and (B) is preferably 0.01 to 20 parts by weight. When the amount of the component (C) is less than the above lower limit, the effect on improvement of the resin composition in mechanical properties is insufficient. When it exceeds the above upper limit, the flowability of the resin composition is insufficient. The amount of the component (C) based on the above basis is more preferably 0.01 to 10 parts by weight, particularly preferably 0.01 to 5 parts by weight.

The method of compounding the above components for the resin composition of the present invention is not specially limited. For example, the compounding is carried out by a method in which all the components are mixed in one lot, and melted and kneaded together; by a method in which the component (A) such as a polyamideimide resin precursor, etc. and the polyphenylene sulfide resin (B) are melted and kneaded together, then the component (C) is added and the resultant mixture is again kneaded; or by a method in which the polyphenylene sulfide resin (B) and the component (C) are melted and kneaded together, then the component (A) such as a polyamideimide resin precursor, etc., is added and then the resultant mixture is again kneaded. In particular, when the component (A) is a polyamideimide resin precursor, it is preferred to employ a method in which the polyamideimide resin precursor and the polyphenylene sulfide resin (B) are melted and kneaded together, then the component (C) is added and the resultant mixture is again kneaded.

When the kneading is carried out with an extruder, it is advantageous to employ a method in which the polyamideimide resin precursor and the polyphenylene sulfide resin are fed through a first feed port, and the component (C) is incorporated through a second feed port provided to a zone where the above two components are in a well-kneaded state.

The temperature for the melting and kneading is preferably between 250°C and 400°C, more preferably between 300°C and 380°C.

The kneading can be carried out, for example, with an extruder, a kneader, a Banbury mixer, rolls, or the like.

The resin composition of the present invention is produced by melting and kneading those components as described above. When the component (A) is the polyamideimide resin precursor, it is considered that the polyamideimide resin precursor is converted to a polyamideimide resin by forming imide rings as a result of ring-closure of most of the amic acid bonds during the kneading. It is preferred to employ a method in which water formed during this step is removed through a vent hole under reduced pressure.

The resin composition of the present invention may properly contain other resin; an elastomer; a variety of additives such as a flame retardant, a flame retardant synergist, a stabilizer, an ultraviolet light absorber and plasticizer; and other components such as a pigment, a filler, etc., as required.

Examples of the above "other resin" are aliphatic and aromatic polyamides, aliphatic and aromatic polyesters, polycarbonate, polysulfone, polyethersulfone, polyetherimide, polyether ketone, polyether ether ketone and polyimide.

Examples of the above elastomer are polysulfide rubber, polyester elastomer, polyamide elastomer, polyesteramide elastomer and silicon rubber.

Examples of a variety of the additives are as follows. The flame retardant is selected from phosphate esters such as triphenyl phosphate and tricresyl phosphate; brominated compounds typified by decabromobiphenyl, pentabromotoluene, decabromobiphenyl ether, hexabromobenzene and brominated polystyrene; nitrogen-containing compounds such as a melamine derivative; and nitrogen-containing phosphorus compounds such as a cyclic phosphazen compound and a phosphazen polymer. The flame retardant synergist is selected from compounds of antimony, boron, zinc and iron.

The other additive is selected from stabilizers such as steric hindered phenol or phosphite compounds; and ultraviolet light absorbers such as oxalic acid diamide compounds and steric hindered amine compounds.

Further, examples of the other components are pigments such as titanium oxide, zinc sulfide and zinc oxide; mineral fillers typified by glass beads, wollastonite, mica, talc, clay, calcium carbonate, magnesium hydroxide, silica, diatomaceous earth, graphite, carborundum and molybdenum disulfide; fillers of inorganic fibers such as glass fibers, milled fibers, boron fibers, silicon carbide fibers, carbon whiskers, asbestos fibers, asbestos, rock wool, potassium titanate fibers and fibers of brass, aluminum and zinc; fillers of organic fibers typified by carbon fibers and aramid fibers; and flakes of aluminum and zinc. These fillers are used preferably in an amount of 1 to 50 % by weight based on the total weight of the resin composition.

As a filler, preferred are glass beads having an average particle diameter of 4.5 to 50 µm, a glass fiber having an average length of 1.5 to 50 mm and an average diameter of 6 to 20 µm, and a milled fiber having an average length of 30 to 300 µm. These fillers may be used as a mixture.

The resin composition of the present invention is not only excellent in heat resistance and melt flowability but also excellent in mechanical strength. These excellent properties are considered to be exhibited by copolymerization between either the polyamideimide resin precursor or the polyamideimide resin and the polyphenylene sulfide resin under a chemical action of the component (C) when these components are melted and kneaded.

The resin composition of the present invention will be detailed further hereinafter by reference to Examples and Comparative Examples.

### Examples 1 - 3

(1) Preparation of polyamideimide resin precursor:
   432.6 Grams of m-phenylenediamine and 445.3 g of triethylamine were dissolved in a mixed solvent consisting of 12.8 lit. of acetone and 5.4 lit. of water. While the resultant mixture was vigorously agitated in a 50 lit. reactor equipped with an agitator, a solution of 842.0 g of trimellitic anhydride monochloride in 5.2 lit. of acetone was added thereto at once, and the resultant mixture was further agitated for 20 minutes to carry out polymerization. After the polymerization, a polymer precipitated was recovered by filtration under suction, and further redispersed in methanol to wash it fully. Then the polymer was recovered by filtration and dried at 50°C under reduced pressure to give a polyamideimide resin precursor.
   The above-obtained polyamideimide resin precursor was measured for a reduced viscosity in a dimethylformamide solution (concentration 1.0 g/dl) at 30°C to show 0.32 dl/g.
   Further, the polyamideimide resin precursor was analyzed on the proportions of an amic acid bond and an imide bond, on the basis of absorption of an imide group at 1,780 cm⁻¹ and absorption of an amide group at 1,525 cm⁻¹ according to an infrared method, to show 10 % of imide rings formed as a result of ring closure of the amic acids and 90 % of remaining amic acid bonds.
(2) The polyamideimide resin precursor prepared in the above (1) (to be referred to as "precursor A" hereinafter) and a polyphenylene sulfide resin (trade name T-4, supplied by Tohprene K.K.) were blended in amounts shown in Table 1, and the resultant blend was melted and kneaded in a twin-screw extruder at 360°C to obtain pellets. Further, 4,4′-diphenylmethane diisocyanate in an amount shown in Table 1 was blended with the pellets, and the resultant blend was again melted and kneaded, and re-extruded in a twin-screw extruder at 360°C to prepare pellets of a resin composition. The pellets were injection-molded to give dumbbell specimens having a thickness of 1/8 inch and transverse test pieces having a thickness of 1/8 inch. The dumbbell specimens were measured for a tensile strength and a tensile modulus, the transverse test pieces were measured for a heat distortion temperature (18.6 kg), and the pellets were measured for a melt flow rate under a stress of 60 kg at 350°C. Table 1 shows the results.

### Comparative Examples 1-3

Examples 1 to 3 were repeated except that 4,4′-diphenylmethane diisocyanate was not added before the re-extrusion. Table 1 shows the results.

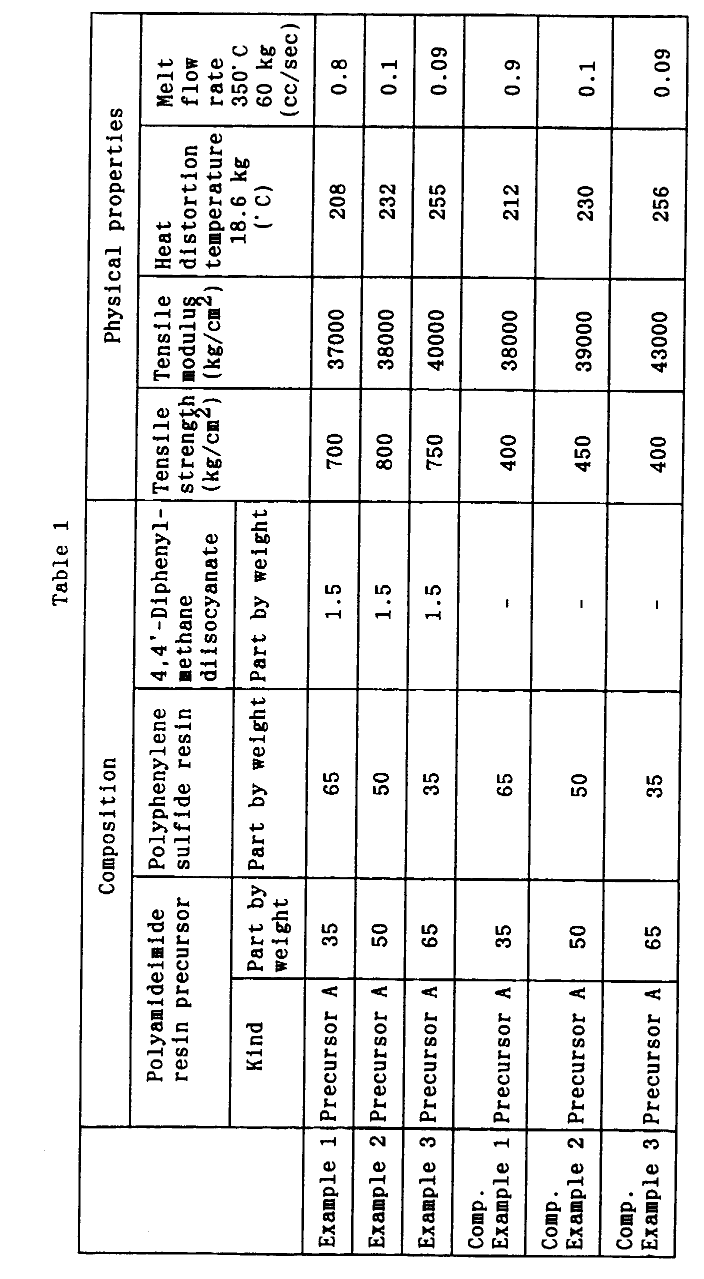

### Examples 4 - 6

(1) Preparation of polyamideimide resin precursor:
   The procedure described in Example 1 (1) was repeated except that 432.6 g of m-phenylenediamine was replaced with 793.1 g of 4,4′-diaminodiphenylmethane.
   The resultant precursor had a reduced viscosity, measured in a dimethylformamide solution (concentration 1.0 g/dl) at 30°C, of 0.39 dl/g and an amic acid bond residual ratio, measured by an infrared method, of 90 %.
(2) Examples 1 to 3 were repeated except that the polyamideimide resin precursor obtained in Example 1 (1) was replaced with the polyamideimide resin precursor obtained in the above (1) (to be referred to as "precursor B" hereinafter). Table 2 shows the results.

### Comparative Examples 4 - 6

Comparative Examples 1 - 3 were repeated except that the polyamideimide resin precursor in Example 1 (1) was replaced with the same polyamideimide resin precursor as that obtained in Example 4 (1). Table 2 shows the results.

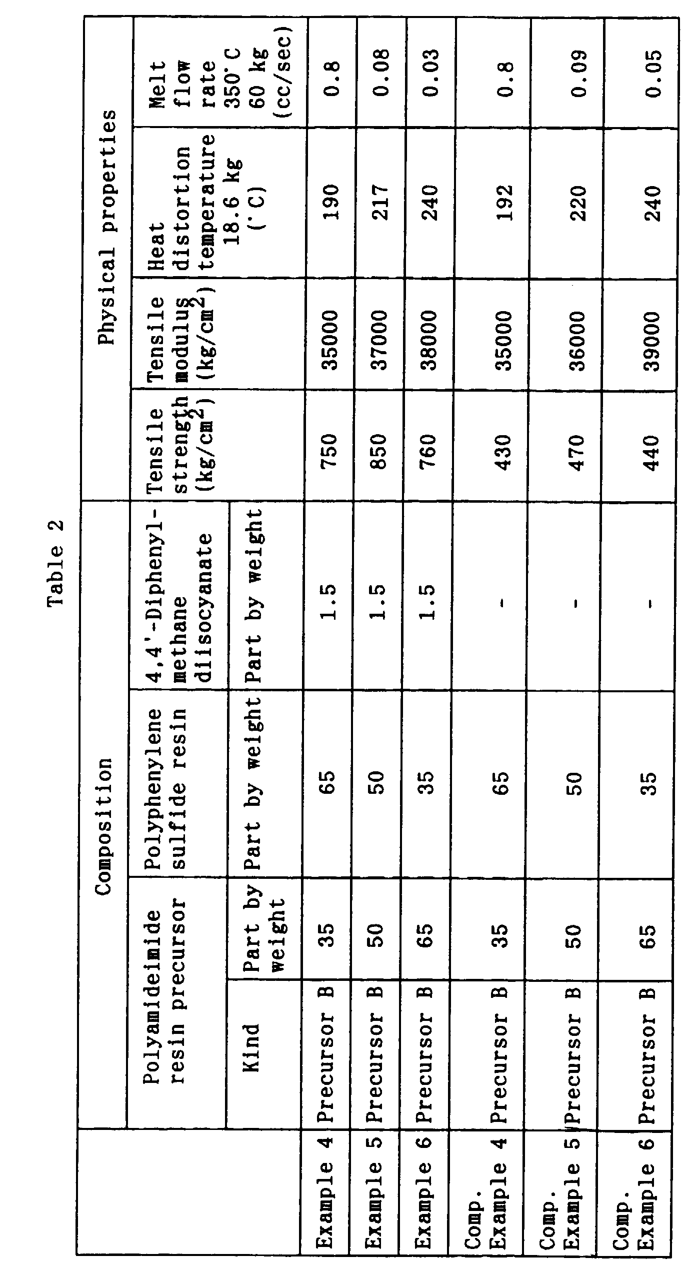

### Examples 7 - 8

(1) Preparation of polyamideimide resin precursor:
   The procedure described in Example 1 (1) was repeated except that 432.6 g of m-phenylenediamine was replaced with 488.7 g of m-tolylenediamine.
   The resultant precursor had a reduced viscosity, measured in a dimethylformamide solution (concentration 1.0 g/dl) at 30°C, of 0.34 dl/g and an amic acid bond residual ratio, measured by an infrared method, of 95 %.
(2) The procedure of Examples 2 to 3 was repeated except that the polyamideimide resin precursor obtained in Example 1 (1) was replaced with the polyamideimide resin precursor obtained in the above (1) (to be referred to as "precursor C" hereinafter). Table 3 shows the results.

### Comparative Examples 7 - 8

The procedure described in Comparative Examples 2 to 3 was repeated except that the polyamideimide resin precursor in Example 1 (1) was replaced with the same polyamideimide resin precursor as that obtained in Example 7 (1). Table 3 shows the results.

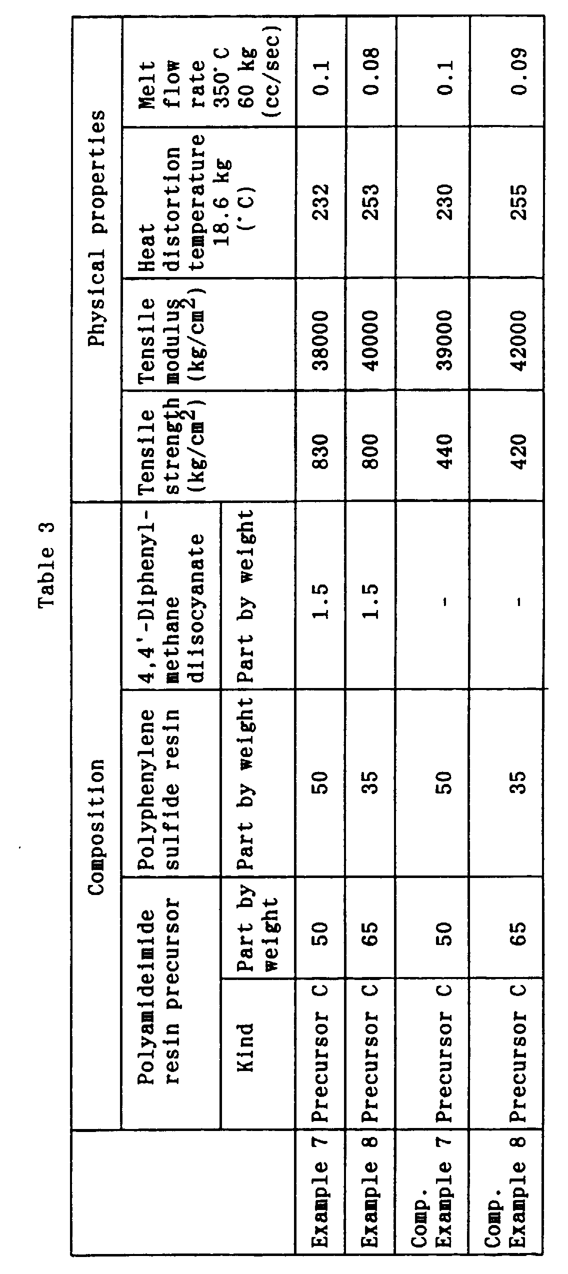

### Examples 9 - 10

(1) Preparation of polyamideimide resin precursor:
   The procedure described in Example 1 (1) was repeated except that 432.6 g of m-phenylenediamine was replaced with a mixture of 216.3 g of m-phenylenediamine and 396.5 g of diaminodiphenylmethane.
   The resultant precursor had a reduced viscosity, measured in a dimethylformamide solution (concentration 1.0 g/dl) at 30°C, of 0.36 dl/g and an amic acid bond residual ratio, measured by an infrared method, of 90 %.
(2) The procedure described in Examples 2 to 3 was repeated except that the polyamideimide resin precursor obtained in Example 1 (1) was replaced with the polyamideimide resin precursor obtained in the above (1) (to be referred to as "precursor D" hereinafter). Table 4 shows the results.

### Comparative Examples 9 - 10

The procedure of Comparative Examples 2 to 3 was repeated except that the polyamideimide resin precursor in Example 1 (1) was replaced with the same polyamideimide resin precursor as that obtained in Example 9 (1). Table 4 shows the results.

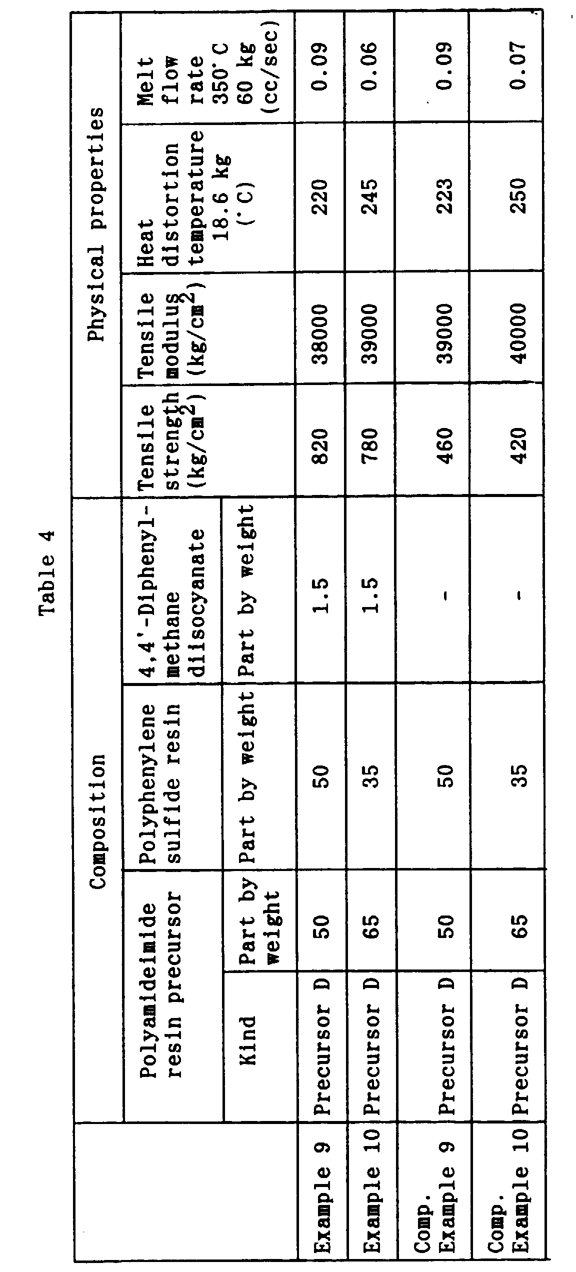

### Examples 11 - 12

(1) Preparation of polyamideimide resin precursor:
   The procedure described in Example 1 (1) was repeated by the use of a mixture of 480. 6 g of 4,4′-diaminodiphenyl ether with 173.0 g of m-phenylenediamine as a diamine component and a mixture of 505.2 g of trimellitic anhydride monochloride with 324.8 g of isophthalic acid dichloride as an acid component.
   The resultant precursor had a reduced viscosity, measured in a dimethylformamide solution (concentration 1.0 g/dl) at 30°C, of 0.35 dl/g and an amic acid bond residual ratio, measured by an infrared method, of 90 %.
(2) The procedure described in Examples 2 to 3 was repeated except that the polyamideimide resin precursor obtained in Example 1 (1) was replaced with the polyamideimide resin precursor obtained in the above (1) (to be referred to as "precursor E" hereinafter). Table 5 shows the results.

### Comparative Examples 11 - 12

The procedure of Comparative Examples 2 to 3 was repeated except that the polyamideimide resin precursor in Example 1 (1) was replaced with the same polyamideimide resin precursor as that obtained in Example 11 (1). Table 5 shows the results.

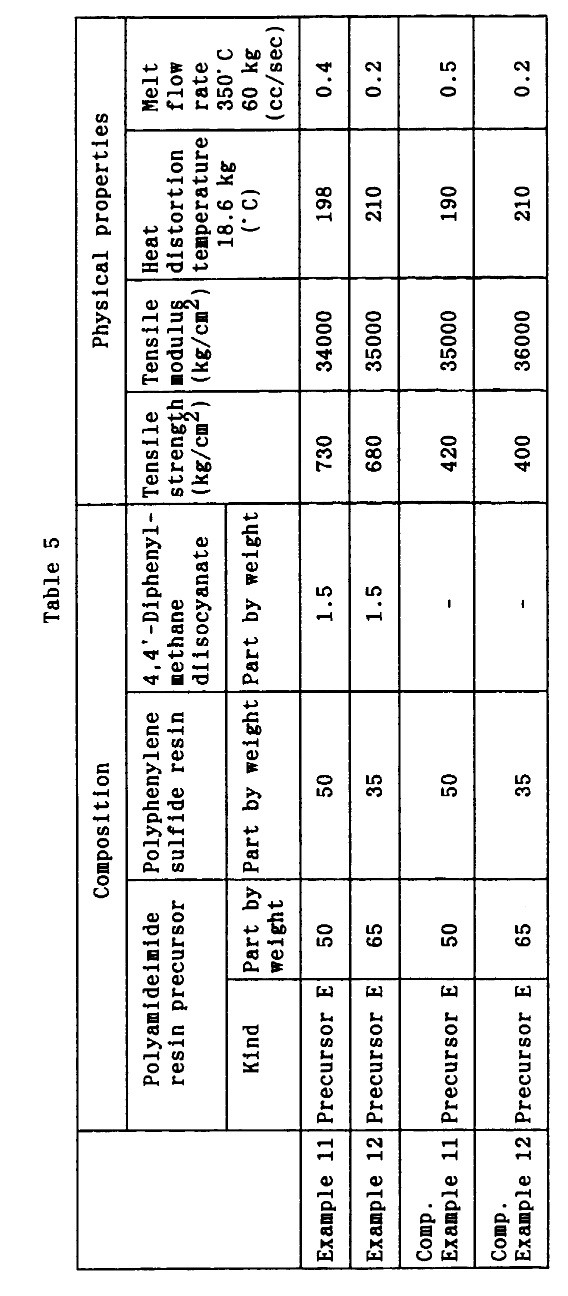

### Examples 13 - 15

(1) Preparation of polyamideimide resin:
   432.6 Grams of m-phenylenediamine and 445.3 g of triethylamine were dissolved in a mixed solvent consisting of 12.8 lit. of acetone and 5.4 lit. of water. While the resultant mixture was vigorously agitated in a 50 lit. reactor equipped with an agitator, a solution of 842.0 g of trimellitic anhydride monochloride in 5.2 lit. of acetone was added thereto at once, and the resultant mixture was agitated for 20 minutes to carry out polymerization. After the polymerization, a polymer precipitated was recovered by filtration under suction, and further redispersed in methanol to wash it fully. Then the polymer was recovered by filtration and dried at 50°C under reduced pressure to give a polyamideimide resin precursor. The above-obtained polyamideimide resin precursor was measured for a reduced viscosity in a dimethylformamide solution (concentration 1.0 g/dl) at 30°C to show 0.32 dl/g. This precursor was further subjected to heat treatment at 150°C for 15 hours to give a polyamideimide resin.
   Further, the polyamideimide resin was analyzed on the proportions of an amic acid bond and an imide bond, on the basis of absorption of an imide group at 1,780 cm⁻¹ and absorption of an amide group at 1,525 cm⁻¹ according to an infrared method, to show about 50 % of imide ring structures.
(2) The polyamideimide resin prepared in the above (1) (to be referred to as "resin A" hereinafter) and a polyphenylene sulfide resin (trade name T-4, supplied by Tohprene K.K.) were blended in amounts shown in Table 6, and the resultant blend was melted and kneaded in a twin-screw extruder at 360°C to obtain pellets. Further, 4,4′-diphenylmethane diisocyanate in an amount shown in Table 6 was blended with the pellets, and the resultant blend was again melted and kneaded, and re-extruded in a twin-screw extruder at 360°C to prepare pellets of a resin composition. The pellets were injection-molded to give dumbbell specimens having a thickness of 1/8 inch and transverse test pieces having a thickness of 1/8 inch. The dumbbell specimens were measured for a tensile strength and a tensile modulus, the transverse test pieces were measured for a heat distortion temperature (18.6 kg), and the pellets were measured for a melt flow rate under a stress of 60 kg at 350°C. Table 6 shows the results.

### Comparative Examples 13 - 15

Examples 13 to 15 were repeated except that 4,4′-diphenylmethane diisocyanate was not added before the re-extrusion. Table 6 shows the results.

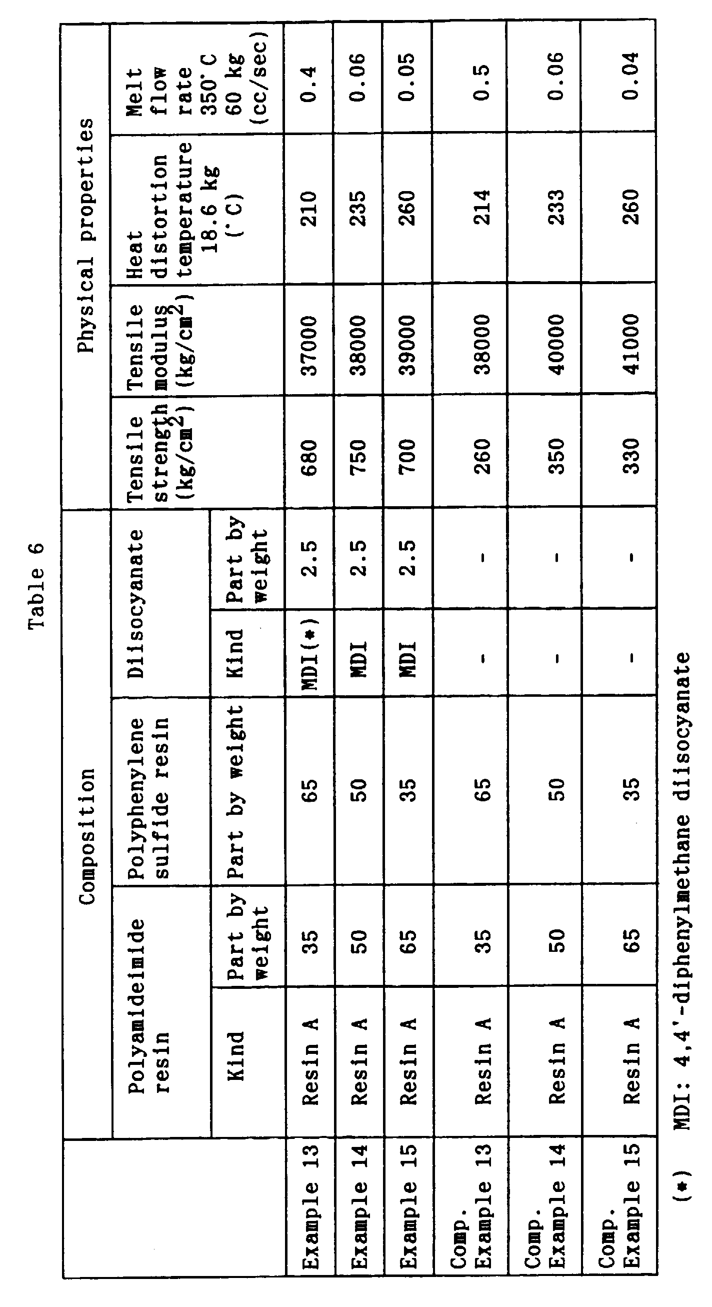

### Examples 16 - 18

(1) Preparation of polyamideimide resin:
   The procedure described in Example 13 (1) was repeated except that 432.6 g of m-phenylenediamine was replaced with 793.1 g of 4,4′-diaminodiphenylmethane.
   The resultant precursor had a reduced viscosity of 0.39 dl/g and an amic acid bond residual ratio, measured by an infrared method after the heat treatment, of about 50 %.
(2) The procedure described in Examples 13 to 15 was repeated except that the polyamideimide resin obtained in Example 13 (1) was replaced with the polyamideimide resin obtained in the above (1) (to be referred to as "resin B" hereinafter). Table 7 shows the results.

### Comparative Examples 16 - 18

The procedure described in Comparative Examples 13 to 15 was repeated except that the polyamideimide resin in Example 13 (1) was replaced with the polyamideimide resin (resin B) obtained in Example 16 (1). Table 7 shows the results.

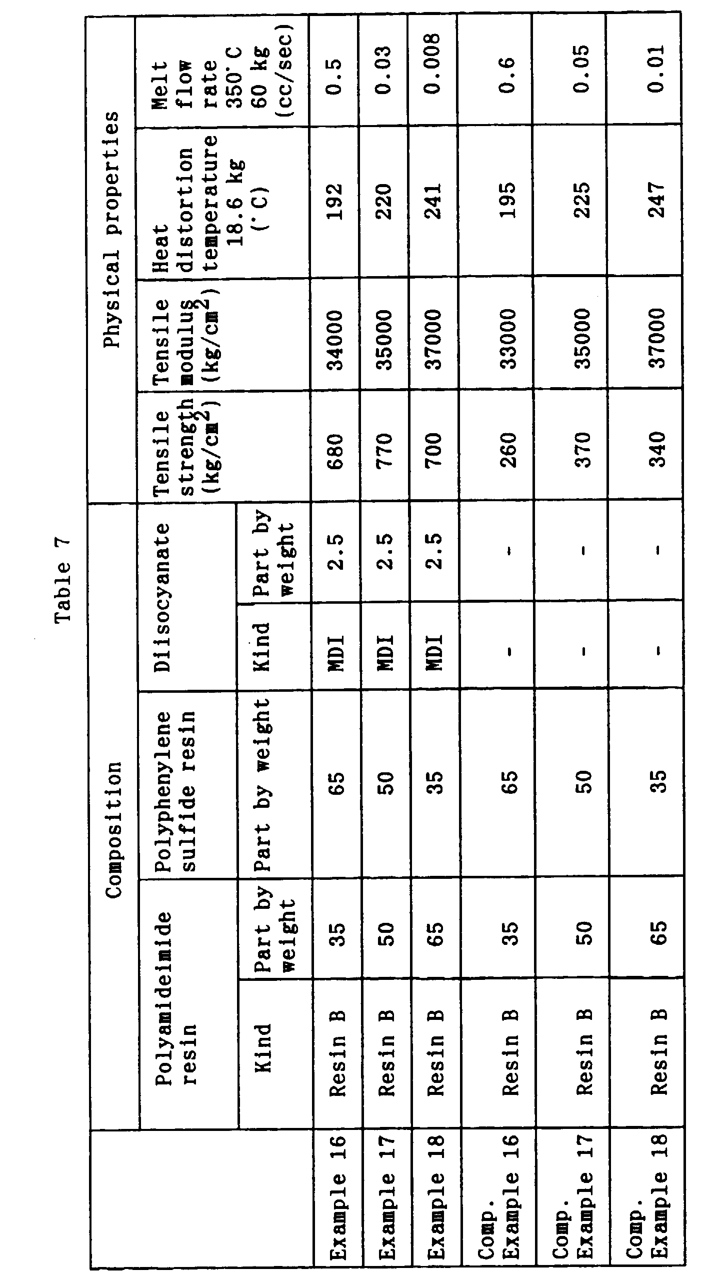

### Example 19

(1) Preparation of polyamideimide resin:
   750.8 Grams of 4,4′-diphenylmethane diisocyanate and 2.5 lit. of dimethylacetamide were charged into a reactor equipped with an agitator, a nitrogen gas-introducing tube, a thermometer and a condenser, and 576.4 g of trimellitic anhydride dissolved in 2 lit. of dimethylacetamide was added thereto. The resultant mixture was allowed to react between 125°C and 135°C for 3 hours, and acetone was used as a nonsolvent to precipitate a polyamideimide resin. The polyamideimide resin was recovered by filtration and dried. The polyamideimide resin had a reduced viscosity of 0.42 dl/g.
(2) The procedure described in Example 15 was repeated except that the polyamideimide resin in Example 13 (1) was replaced with the polyamideimide resin obtained in the above (1) (to be referred to as "resin C" hereinafter). Table 8 shows the results.

### Comparative Example 19

The procedure described in Comparative Example 15 was repeated except that the polyamideimide resin in Example 13 (1) was replaced with the polyamideimide resin (resin C) obtained in Example 19 (1). Table 8 shows the results.

### Examples 20 - 21

(1) Preparation of polyamideimïde resin:
   The procedure described in Example 13 (1) was repeated except that 432.6 g of m-phenylenediamine was replaced with 488.7 g of m-tolylenediamine. The resultant precursor had a reduced viscosity of 0.34 dl/g, and the resin obtained by subjecting the precursor to heat treatment was measured for a proportion of an imide ring structure by an infrared method to show about 50 %.
(2) The procedure described in Examples 14 to 15 was repeated except that the polyamideimide resin in Example 13 (1) was replaced with the polyamideimide resin obtained in the above (1) (to be referred to as "resin D"). Table 8 shows the results.

### Example 22

The procedure described in Example 15 was repeated except that the polyamideimide resin in Example 13 (1) was replaced with the polyamideimide resin (resin D) obtained in Example 21 (1) and that 2.5 parts by weight of the diphenylmethane diisocyanate was replaced with 3.5 parts by weight of tolylene diisocyanate. Table 8 shows the results.

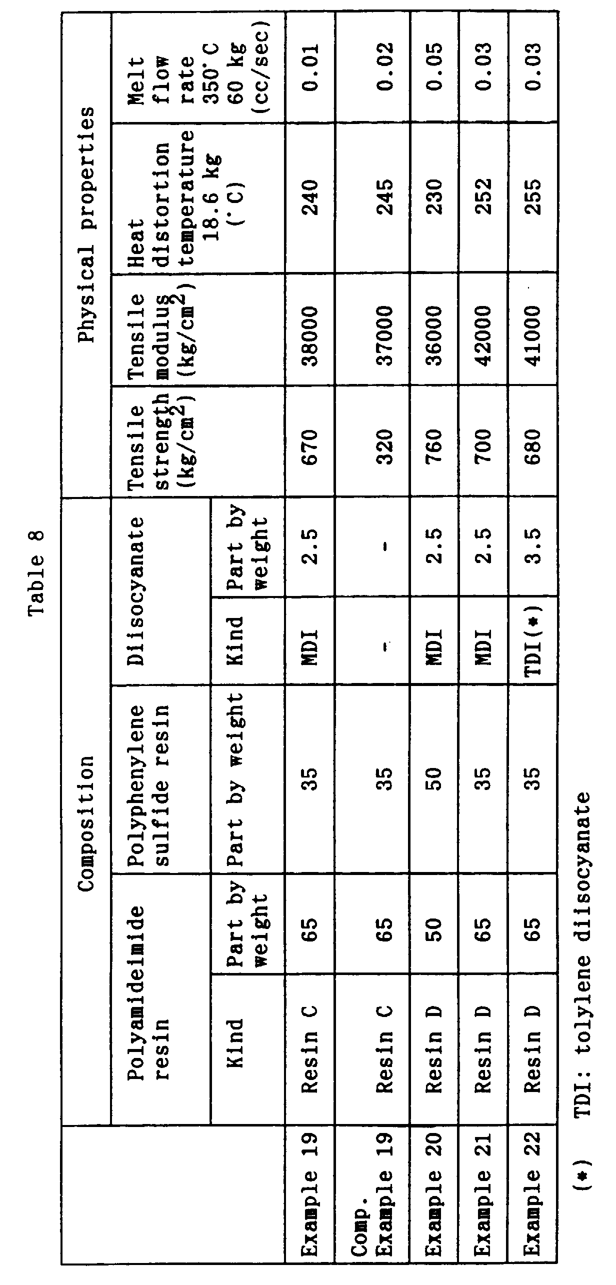

### Comparative Examples 20 - 21

The procedure described in Comparative Examples 14 to 15 was repeated except that the polyamideimide resin in Example 13 (1) was replaced with the polyamideimide resin (resin D) described in Example 21 (1). Table 9 shows the results.

### Example 23

(1) Preparation of polyamideimide resin:
   The procedure described in Example 19 (1) was repeated except that 750.8 g of 4,4′-diphenylmethane diisocyanate was replaced with 522.5 g of tolylene diisocyanate. The resultant polyamideimide resin had a reduced viscosity of 0.32 dl/g.
(2) The procedure described in Example 15 was repeated except that the polyamideimide resin in Example 13 (1) was replaced with the polyamideimide resin obtained in the above (1) (to be referred to as "resin E" hereinafter). Table 9 shows the results.

### Example 24

The procedure described in Example 15 was repeated except that the polyamideimide resin in Example 13 (1) was replaced with the polyamideimide resin (resin E) obtained in Example 23 (1) and that 2.5 parts by weight of the diphenylmethane diisocyanate was replaced with 3.5 parts by weight of tolylene diisocyanate. Table 9 shows the results.

### Comparative Example 22

The procedure described in Comparative Example 15 was repeated except that the polyamideimide resin in Example 13 (1) was replaced with the polyamideimide resin (resin E) obtained in Example 23 (1). Table 9 shows the results.

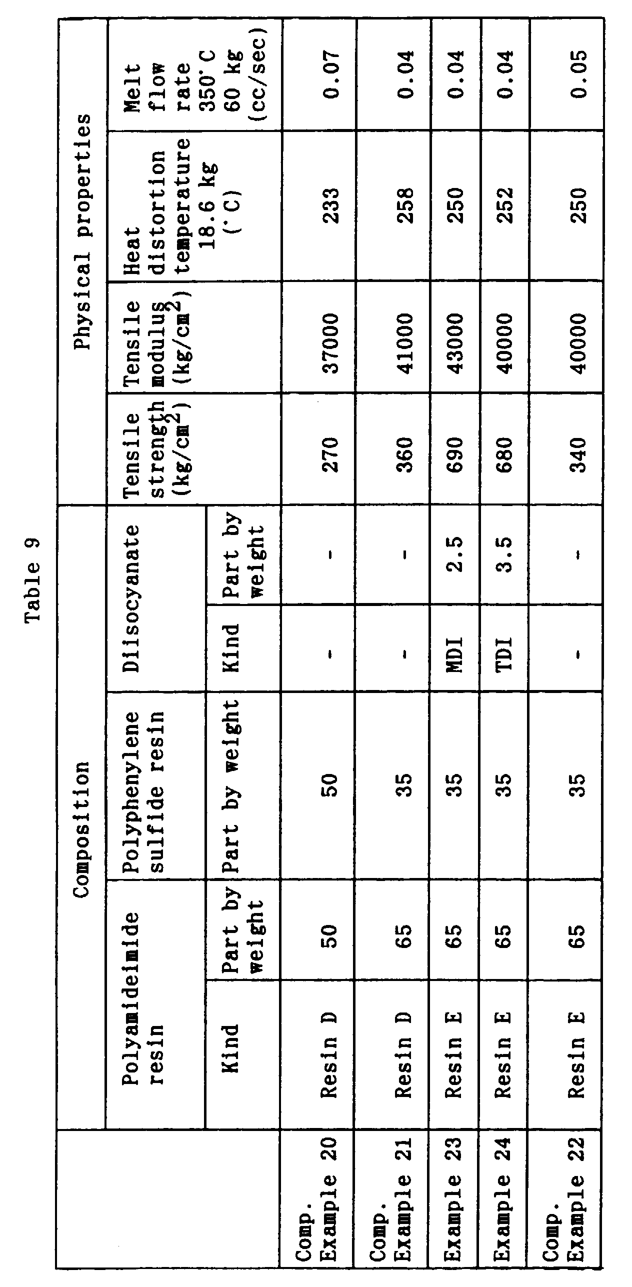

### Examples 25 - 26

(1) Preparation of polyamideimide resin:
   The procedure described in Example 13 (1) was repeated except that 432.6 g of the m-phenylenediamine was replaced with a mixture consisting of 216.3 g of m-phenylenediamine and 396.5 g of diaminodiphenylmethane. The resultant precursor had a reduced viscosity of 0.36 dl/g. The resin obtained by subjecting the precursor to heat treatment was measured for a proportion of an imide ring structure by an infrared method to show about 50 mol%.
(2) The procedure described in Examples 14 to 15 was repeated except that the polyamideimide resin in Example 13 (1) was replaced with the polyamideimide resin obtained in the above (1) (to be referred to as "resin F"). Table 10 shows the results.

### Comparative Examples 23 - 24

The procedure described in Comparative Examples 14 to 15 was repeated except that the polyamideimide resin in Example 13 (1) was replaced with the polyamideimide resin (resin F) obtained in Example 25 (1). Table 10 shows the results.

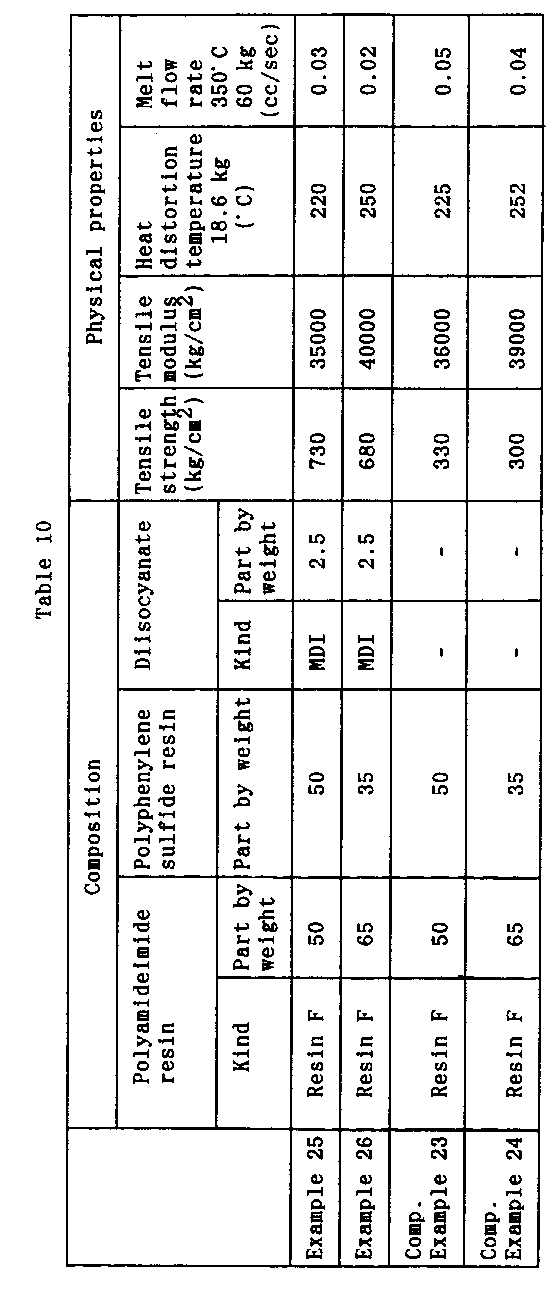

### Examples 27 - 28

(1) Preparation of polyamideimide resin:
   108.1 Grams of m-phenylenediamine, 384.3 g of trimellitic anhydride and 2.5 lit. of dimethylacetamide were charged into a reactor equipped with an agitator, a nitrogen-introducing tube, a thermometer and a condenser, and the resultant mixture was allowed to react under reflux for 3 hours. The reaction mixture was cooled, and then 250.3 g of 4,4′-diphenylmethane diisocyanate was added thereto. The resultant mixture was allowed to react at 135°C for 3 hours. The reaction mixture was treated in the same manner as in Example 13 (1) to prepare a polyamideimide resin. The polyamideimide resin had a reduced viscosity of 0.45 dl/g.
(2) The procedure described in Examples 14 to 15 was repeated except that the polyamideimide resin in Example 13 (1) was replaced with the polyamideimide resin obtained in the above (1) (to be referred to as "resin G" hereinafter). Table 11 shows the results.

### Comparative Examples 25 - 26

The procedure described in Comparative Example 14 to 15 was repeated except that the polyamideimide resin in Example 13 (1) was replaced with the polyamideimide resin (resin G) obtained in Example 27 (1). Table 11 shows the results.

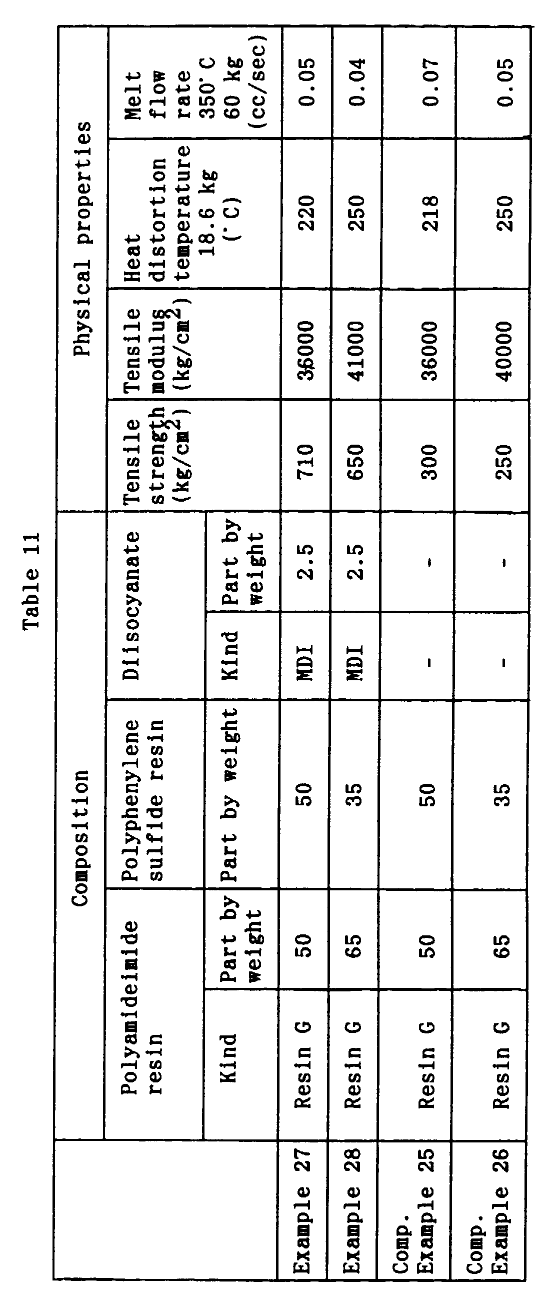

### Examples 29 - 30

(1) Preparation of polyamideimide resin:
   The procedure described in Example 13 (1) was repeated by the use of a mixture of 480. 6 g of 4,4'-diaminodiphenyl ether with 173.0 g of m-phenylenediamine as a diamine component and a mixture of 505.2 g of trimellitic anhydride monochloride with 324.8 g of isophthalic acid dichloride as an acid component. The resultant precursor had a reduced viscosity of 0.35 dl/g, and the resin obtained by subjecting the precursor to heat treatment was measured for a proportion of an imide ring structure to show about 30 mol%.
(2) The procedure described in Examples 14 to 15 was repeated except that the polyamideimide resin in Example 13 (1) was replaced with the polyamideimide resin obtained in the above (1) (to be referred to as "resin H" hereinafter). Table 12 shows the results.

### Comparative Examples 27 - 28

The procedure of Comparative Examples 14 to 15 was repeated except that the polyamideimide resin precursor in Example 13 (1) was replaced with the polyamideimide resin (resin H) obtained in Example 29 (1). Table 12 shows the results.

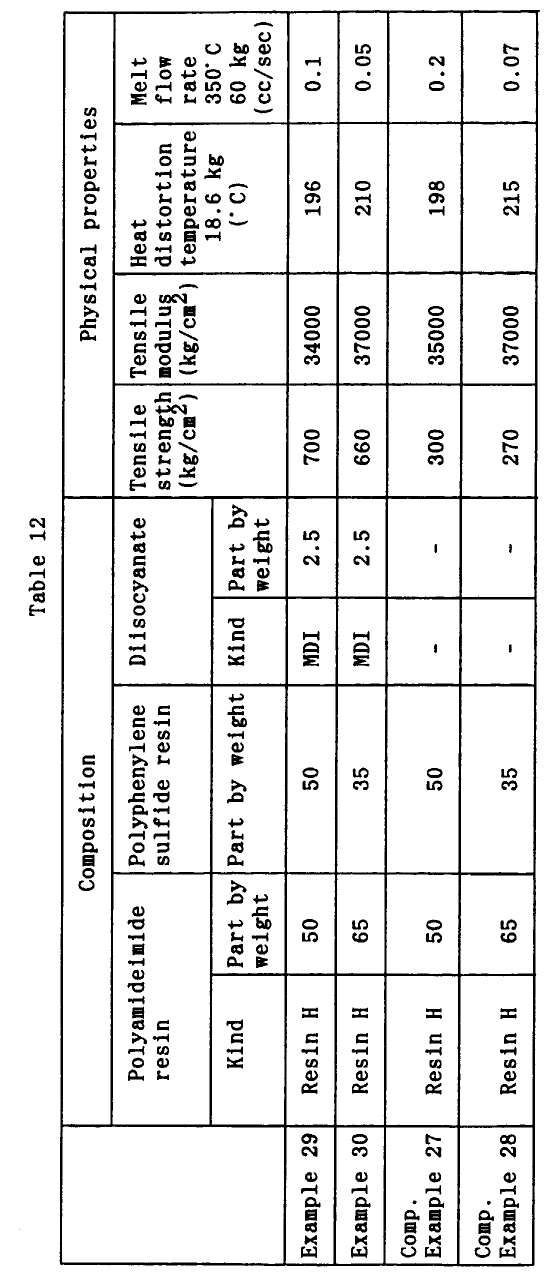

### Examples 31 - 32

(1) Preparation of polyamideimide resin:
   480.6 Grams of 4,4′-diaminodiphenyl ether, 173.0 g of m-phenylenediamine and 5 lit. of dimethylacetamide were charged into a reactor equipped with an agitator, a nitrogen-introducing tube, and a thermometer, and 842 g of trimellitic anhydride monochloride was gradually added. Thereafter, the resultant mixture was allowed to stand for 15 hours to finish the reaction. A polymer was obtained in the same manner as in Example 13 (1) by means of acetone as a nonsolvent. The resultant precursor had a reduced viscosity of 0.30 dl/g. The resin obtained by subjecting the precursor to heat treatment was measured for a proportion of an imide ring structure by an infrared method to show about 50 mol%.
(2) The procedure described in Examples 14 to 15 was repeated except that the polyamideimide resin in Example 13 (1) was replaced with the polyamideimide resin obtained in the above (1) (to be referred to as "resin I" hereinafter). Table 13 shows the results.

### Comparative Examples 29 - 30

The procedure described in Comparative Examples 14 to 15 was repeated except that the polyamideimide resin in Example 13 (1) was replaced with the polyamideimide resin (resin I) obtained in Example 31 (1). Table 13 shows the results.

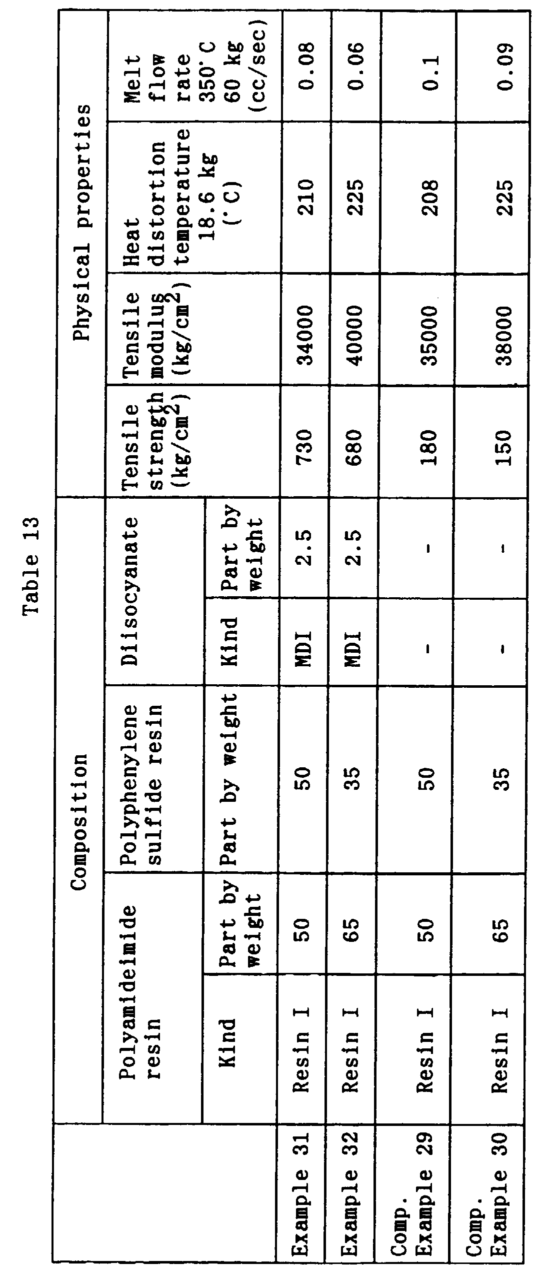

## Claims

1. A heat-resistant resin composition comprising a melt-kneaded product of:
(A) at least one member selected from the group consisting of a polyamideimide resin precursor containing not less than 50 mol% of a recurring unit of the formula (1)-a, 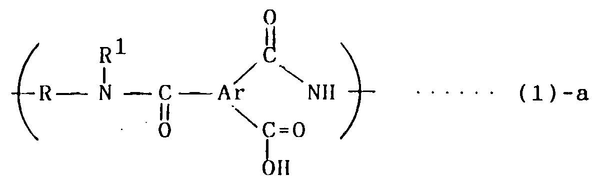 wherein R is a divalent aromatic group or aliphatic group, R¹ is a hydrogen atom, an alkyl group or a phenyl group, and Ar is a trivalent aromatic group composed of at least one six-membered ring,
and a polyamideimide resin containing not less than 50 mol% of a recurring unit of the formula (1)-b, 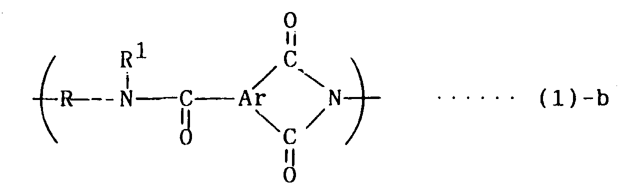 wherein R, R¹ and Ar are as defined in the above formula (1)-a,
(B) a polyphenylene sulfide resin, and
(C) an organic isocyanate compound having at least two isocyanate groups in the molecule.

2. The composition of Claim 1, wherein the polyamideimide resin precursor contains 70 to 100 mol% of the recurring unit of the formula (1)-a.

3. The composition of Claim 1, wherein the polyamideimide resin contains 70 to 100 mol% of the recurring unit of the formula (1)-b.

4. The composition of Claim 1, wherein the polyphenylene sulfide resin contains at least 70 mol% of a recurring unit of the following formula,

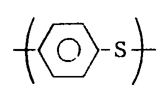

5. The composition of Claim 1, wherein the organic isocyanate compound is selected from the group consisting of aromatic polyisocyanate, aliphatic polyisocyanate, an adduct of one of these polyisocyanates with a polyhydric alcohol, an adduct of one of these polyisocyanates with water, an adduct of one of these polyisocyanates with an amine, and an isocyanurate product obtained by modifying one of these polyisocyanates.

6. The composition of Claim 1, wherein, based on the total amount of the components (A) and (B), the amount of the component (A) is 5 to 95 % by weight and the amount of the component (B) is 95 to 5 % by weight.

7. The composition of Claim 1, wherein the component (C) is contained in an amount of 0.01 to 20 parts by weight based on the total amount of the components (A) and (B).

## Patentansprüche

1. Wärmebeständige Harzzusammensetzung, die ein schmelzgeknetetes Produkt aus:
(A) wenigstens einem Bestandteil, der aus der Gruppe ausgewählt ist, die aus einem Polyamidimidharz-Vorläufer, der nicht weniger als 50 Mol % einer wiederkehrenden Einheit der Formel (1)-a enthält, 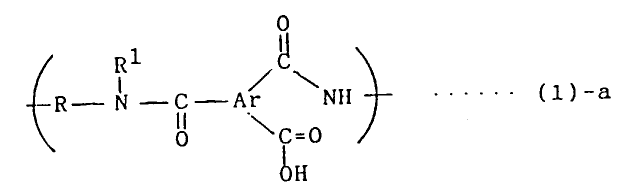 worin R eine divalente aromatische Gruppe oder aliphatische Gruppe, R¹ ein Wasserstoffatom, eine Alkylgruppe oder eine Phenylgruppe und Ar eine trivalente aromatische Gruppe, die aus wenigstens einem sechsgliedrigen Ring zusammengesetzt ist, ist und
einem Polyamidimidharz, das nicht weniger als 50 Mol % einer wiederkehrenden Einheit der Formel (1)-b enthält, 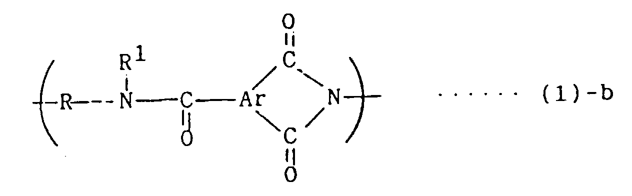 worin R, R¹ und Ar die in der Formel (1)-a angegebene Be deutung besitzen, besteht,
(B) einem Polyphenylensulfidharz und
(C) einer organischen Isocyanatverbindung mit wenigstens zwei Isocyanatgruppen im Molekül, umfaßt.

2. Zusammensetzung nach Anspruch 1, worin der Polyamidimidharz-Vorläufer 70 bis 100 Mol % der wiederkehrenden Einheit der Formel (1)-a enthält.

3. zusammensetzung nach Anspruch 1, worin das Polyamidimidharz 70 bis 100 Mol % der wiederkehrenden Einheit der Formel (1)-b enthält.

4. Zusammensetzung nach Anspruch 1, worin das Polyphenylensulfidharz wenigstens 70 Mol % einer wiederkehrenden Einheit der folgenden Formel 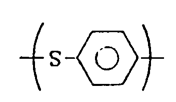 enthält.

5. Zusammensetzung nach Anspruch 1, worin die organische Isocyanatverbindung aus der Gruppe ausgewählt ist, die aus aromatischem Polyisocyanat, aliphatischem Polyisocyanat, einem Produkt eines dieser Polyisocyanate mit einem mehrwertigen Alkohol, einem Adukt eines dieser Polyisocyanate mit Wasser, einem Adukt von eines dieser Polyisocyanate mit einem Amin und einem Isocyanuratprodukt, das durch Modifikation eines dieser Polyisocyanate erhalten wird, besteht.

6. Zusammensetzung nach Anspruch 1, worin, basierend auf der Gesamtmenge der Verbindungen (A) und (B), die Menge der Verbindung (A) 5 bis 95 Gew.% und die Menge der Verbindung (B) 95 bis 5 Gew.% beträgt.

7. Zusammensetzung nach Anspruch 1, worin die Verbindung (C) in einer Menge von 0,01 bis 20 Gewichtsteile, basierend auf der Gesamtmenge der Verbindung (A) und (B), enthalten ist.

## Revendications

1. Composition de résine résistant à la chaleur comprenant un produit malaxé à l'état fondu de:
(A) au moins un élément choisi dans le groupe formé par un précurseur de résine polyamide-imide contenant pas moins de 50% en mole d'un motif récurrent de formule (1)-a, 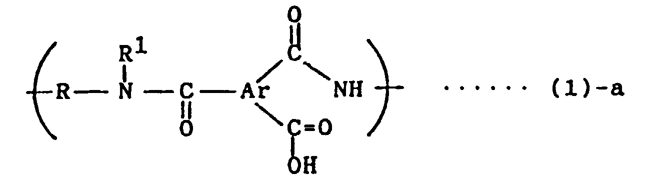 dans laquelle R est un groupe aromatique ou un groupe aliphatique divalent, R¹ est un atome d'hydrogène, un groupe alkyle ou un groupe phényle, et Ar est un groupe aromatique trivalent composé d'au moins un noyau à six éléments,
et une résine polyamide-imide contenant pas moins de 50% en mole d'un motif récurrent de formule (1)-b, 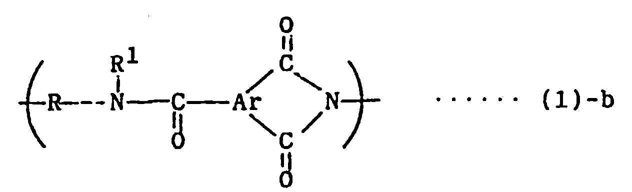 dans laquelle R, R¹ et Ar sont tels que définis dans la formule (1)-a ci-dessus.
(B) une résine de poly(sulfure de phénylène), et
(C) un composé isocyanate organique ayant au moins deux groupes isocyanate dans la molécule.

2. Composition selon la revendication 1, dans laquelle le précurseur de la résine polyamide-imide contient 70 à 100% en mole du motif récurrent de formule (1)-a.

3. Composition selon la revendication 1, dans laquelle la résine polyamide-imide contient 70 à 100% en mole du motif récurrent de formule (1)-b.

4. Composition selon la revendication 1, dans laquelle la résine poly(sulfure de phénylène) contient au moins 70% en mole d'un motif récurrent de formule suivante

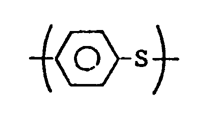

5. Composition selon la revendication 1, dans laquelle le composé isocyanate organique est choisi dans le groupe formé par un polyisocyanate aromatique, un polyisocyanate aliphatique, un produit d'addition de l'un de ces polyisocyanates avec un polyol, un produit d'addition de l'un de ces polyisocyanates avec de l'eau, un produit d'addition de l'un de ces polyisocyanates avec une amine, et un produit isocyanurate obtenu en modifiant un de ces polyisocyanates.

6. Composition selon la revendication 1, dans laquelle, par rapport à la quantité totale des composants (A) et (B), la quantité du composant (A) est comprise entre 5 et 95% en poids et la quantité du composant (B) est comprise entre 95 et 5% en poids.

7. Composition selon la revendication 1, dans laquelle le composant (C) est contenu en une quantité comprise entre 0,01 et 20% en poids par rapport à la quantité totale des composants (A) et (B).
